# FASCICULE DE BREVET EUROPEEN

(11) **EP 2 902 780 B1**
(45) Date de publication et mention de la délivrance du brevet: **19.02.2020**
(21) Numéro de dépôt: 15152682.9
(22) Date de dépôt: 27.01.2015
(51) Int. Cl.: G01N 29/22, G01N 29/30, G01N 29/44

(54) **Système d'aide à l'alignement pour émetteur à ultrasons, ensemble de détecteur à ultrasons et procédé d'alignement**
Hilfssystem zur Ausrichtung für Ultraschallsender, Ultraschallsensoranordnung und Ausrichtungsverfahren
System to assist with the alignment of an ultrasound emitter, ultrasound detector assembly and alignment method

(30) Priorité: 30.01.2014 FR 1450756
(43) Date de publication de la demande: 05.08.2015
(73) Titulaire: Schneider Electric Industries SAS, 92500 Rueil-Malmaison (FR)
(72) Inventeur: Fassi, Brice, 38050 Grenoble Cedex 9 (FR)
(74) Mandataire: Brevalex

(56) Documents cités:
- DE-A1-102011 050 051
- US-A- 4 155 243

## Description

### DOMAINE TECHNIQUE

L'invention se rapporte au domaine de la détection d'objet par ultrasons, et plus précisément à l'alignement de détecteurs à ultrasons permettant une telle détection.

### ÉTAT DE LA TECHNIQUE ANTÉRIEURE

Que ce soit dans les domaines de la logistique et du transport ou dans celui des procédés industriels automatisés, il n'est pas rare de faire appel à des détecteurs à ultrasons.

Ce type de détecteurs utilise des ondes ultrasonores pour détecter la présence et/ou le passage d'un objet se trouvant, par exemple, sur un convoyeur à bande. Afin de réaliser une telle détection, ces détecteurs comportent un émetteur et un récepteur à ultrasons pouvant être indépendants l'un de l'autre ou mono-boîtier. Dans cette dernière configuration, le détecteur à ultrasons fait donc office à la fois d'émetteur et de récepteur.

En effet, ces détecteurs à ultrasons peuvent fonctionner selon trois configurations différentes.

Selon une première configuration, généralement mono-boîtier, le détecteur à ultrasons émet en continu, ou de manière impulsionnelle, des ondes ultrasonores en direction d'une zone de passage de l'objet à détecter. Lors du passage de l'objet, ce dernier intercepte les ondes ultrasonores et en réfléchit une partie en direction du détecteur. Ainsi, dans cette première configuration, c'est la détection d'ondes réfléchies par l'objet à détecter qui permet la détection de ce dernier.

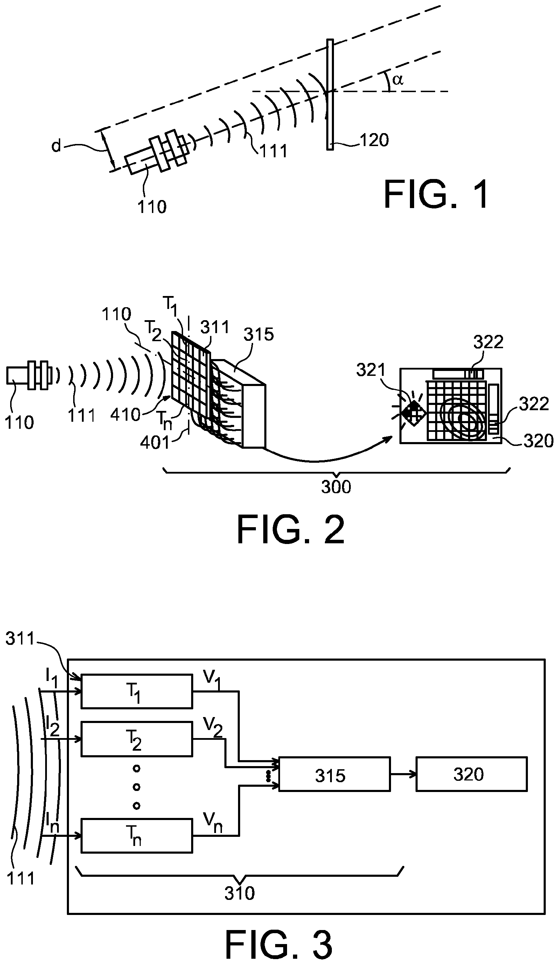

Dans une deuxième configuration, généralement mono-boîtier, illustrée sur la figure 1, le détecteur 110 émet également en continu, ou de manière impulsionnelle, des ondes ultrasonores 111 en direction d'une zone de passage de l'objet à détecter. Il est prévu, au-delà de la zone de passage de l'objet à détecter et sur le trajet des ondes ultrasonores, un réflecteur 120, tel qu'une paroi murale agencée pour réfléchir les ondes ultrasonores en direction du détecteur 110 ceci de manière à renvoyer lesdites ondes ultrasonores vers le détecteur 110. Ainsi, en l'absence de l'objet à détecter, le réflecteur 120 réfléchit les ondes ultrasonores 111 en direction du détecteur 110. Dans cette deuxième configuration, le passage de l'objet à détecter est détecté lorsque l'objet intercepte par son passage les ondes ultrasonores 111. Dans cette deuxième configuration, c'est donc la modification, ou l'interruption, de la détection par le récepteur des ondes réfléchies qui permet la détection de l'objet à détecter.

Dans une troisième configuration, l'émetteur et le récepteur sont indépendants et séparés l'un de l'autre. L'émetteur émet des ondes ultrasonores (en continu ou de manière impulsionnelle) en direction de la zone de passage de l'objet à détecter. Le récepteur est prévu sur le trajet des ondes ultrasonores au-delà de la zone de passage de l'objet à détecter. Ainsi, en l'absence de l'objet à détecter, le récepteur reçoit les ondes ultrasonores. L'objet à détecter, lors de son passage, vient intercepter les ondes ultrasonores et donc empêche leur détection par le récepteur. C'est donc ici aussi, la modification, ou l'interruption, de la détection des ondes ultrasonores par le récepteur qui permet la détection de l'objet à détecter.

Par souci de concision, on entend, ci-dessous, et dans le reste de ce document, par l'émetteur d'un détecteur à ultrasons, soit la partie émettrice de ce dernier lorsqu'il est du type mono-boîtier (notamment les première et deuxième configurations), soit l'émetteur en tant que tel lorsque le détecteur comprend un émetteur et un récepteur indépendants.

Quelle que soit la configuration employée pour la détection à ultrasons, le positionnement de l'émetteur du détecteur est primordial.

En effet, dans la première configuration, il est nécessaire que le positionnement de l'émetteur, qui est défini par son orientation et sa position dans l'espace, par rapport à la face réfléchissante de l'objet à détecter soit parfaitement contrôlé pour garantir qu'une partie suffisante des ondes ultrasonores soit réfléchie en direction de la partie récepteur du détecteur. Dans les deuxième et troisième configurations, c'est le positionnement, plus précisément l'orientation et la position, de l'émetteur par rapport au réflecteur et/ou au récepteur qui doit être parfaitement contrôlé. Une mauvaise orientation peut, dans ces deux configurations, empêcher toute détection et par conséquent tout fonctionnement du détecteur.

On entend ci-dessus et dans le reste de ce document par respectivement orientation et position d'un émetteur par rapport à un référentiel, tel qu'un réflecteur ou un récepteur, respectivement l'angle que fait la direction d'émission d'ultrasons de l'émetteur par rapport audit référentiel et la position dans l'espace de l'émetteur par rapport à ce même référentiel. Le réglage du positionnement d'un émetteur correspond donc à la fois au réglage de l'orientation et de la position de l'émetteur.

Le réglage du positionnement de l'émetteur est communément appelé alignement de l'émetteur. Il s'agit en effet d'aligner le faisceau d'émission par rapport à un référentiel.

Cet alignement est généralement réalisé par tâtonnement en cherchant le positionnement de l'émetteur permettant de maximiser l'intensité des ondes ultrasonores reçues par le récepteur (en présence de l'objet à détecter pour la première configuration et en l'absence de l'objet à détecter pour les deuxième et troisième configurations).

Une telle procédure est longue et est relativement peu efficace. En effet, comme illustré sur la figure 1 pour la deuxième configuration, il est nécessaire de jouer à la fois sur l'orientation (l'angle a) et la position (représentée par la distance d) de l'émetteur 110. Il est donc peu aisé pour l'opérateur réalisant cette procédure de discriminer efficacement le paramètre sur lequel jouer et d'identifier le sens dans lequel il est nécessaire de faire varier ce paramètre. Avec une telle procédure, l'opérateur n'est donc pas assuré d'obtenir cette maximisation de l'intensité des ondes ultrasonores 111 reçues et l'alignement obtenu reste grossier et peu précis.

Pour optimiser ce processus d'alignement des émetteurs à ultrasons, il pourrait éventuellement être envisagé d'utiliser un groupe de récepteurs à ultrasons.

Un tel groupe de récepteurs pourrait comporter une pluralité de récepteurs. Chacun des récepteurs comporterait un transducteur, présentant une surface de réception d'ultrasons, et une unité de traitement configurée pour traiter les signaux issus du transducteur.

Ce groupe de récepteurs devrait alors être positionné, selon le type de configuration du détecteur à ultrasons, soit en vis-à-vis de la zone de passage des objets à détecter (la première configuration), soit au niveau de l'emplacement du réflecteur/récepteur (les deuxième et troisième configurations). Ainsi, par la mise en œuvre de l'émission d'ultrasons par l'émetteur, il devrait être possible d'identifier le, ou les, récepteurs du groupe de récepteurs recevant les ultrasons. En fonction du ou des récepteurs ainsi stimulés, il devrait être possible de détecter un problème d'alignement de l'émetteur par rapport soit au passage des objets à détecter (la première configuration), soit du réflecteur/récepteur (les deuxième et troisième configurations) et d'identifier la direction selon laquelle le récepteur est désaligné.

Ainsi, avec un tel groupe de récepteurs, l'opérateur devrait pouvoir utiliser la direction identifiée pour modifier l'un des deux paramètres parmi l'orientation et la position de l'émetteur et obtenir un alignement plus rapidement que par le procédé de tâtonnement déjà explicité. Néanmoins, en raison de l'espace important entre les récepteurs du groupe, cette indication resterait grossière et il resterait donc difficile avec un tel groupement de récepteurs d'optimiser parfaitement l'alignement du détecteur.

Il est à noter qu'il est connu par le document DE-A1 -102011050051 d'utiliser un groupe de récepteurs à ultrasons pour aligner un groupe d'émetteurs d'ondes ultrasonores.

### EXPOSÉ DE L'INVENTION

L'invention a pour objet de fournir une assistance à l'alignement d'émetteur à ultrasons qui permet un alignement facilité et amélioré par rapport à un alignement qui pourrait être réalisé à l'aide d'un groupe de récepteurs tel qu'envisagé ci-dessus.

A cet effet, l'invention concerne un procédé d'alignement d'un émetteur au moyen d'un système d'aide à l'alignement, le système d'alignement comportant :
- un récepteur comportant une pluralité de transducteurs chacun adapté pour recevoir une onde ultrasonore et la convertir en un signal respectif, et une unité de traitement configurée pour traiter l'ensemble des signaux issus des transducteurs, au moins une partie des transducteurs étant agencés de manière à former une première ligne de transducteurs continue,
- un dispositif de contrôle d'alignement agencé pour communiquer avec l'unité de traitement, le dispositif de contrôle d'alignement étant configuré pour fournir une indication concernant le ou les transducteurs de la première ligne recevant ladite onde ultrasonore émise par ledit émetteur de manière à permettre l'alignement de l'émetteur vis-à-vis du récepteur,

Le procédé comprenant les étapes suivantes de:
- positionnement du récepteur au niveau d'un emplacement, tel que celui d'un réflecteur, par rapport auquel l'émetteur doit être aligné,
- émission par l'émetteur d'une seule onde ultrasonore,
- réception de l'onde ultrasonore par les transducteurs et conversion en signaux,
- traitement par l'unité de traitement des signaux issus des transducteurs,
- fourniture par le dispositif de contrôle d'alignement d'une indication concernant la détection de la seule onde ultrasonore émise par l'émetteur le long de la première ligne de manière à permettre l'alignement de l'émetteur vis-à-vis du récepteur.

Un tel procédé permet, de par j'agencement des transducteurs sous la forme d'une ligne de transducteurs continue, d'identifier aisément la direction selon laquelle le long de la ligne il est nécessaire de modifier le positionnement de l'émetteur, ceci avec une précision plus importante que pourrait permettre d'obtenir un procédé utilisant un groupe de récepteurs. En effet, l'espacement entre les transducteurs étant minimal, l'identification du transducteur recevant majoritairement l'onde ultrasonore est plus juste et donc l'alignement de l'émetteur s'en trouve plus précis.

De plus l'utilisation, dans ce procédé, de transducteurs partageant la même unité de traitement autorise l'utilisation de transducteurs élémentaires de faible taille et donc avec une densité importante. Ainsi, un tel procédé autorise une discrimination de la forme d'onde reçue le long de la première ligne de transducteurs, l'onde étant reçue par plusieurs transducteurs. Une telle discrimination autorise l'identification du paramètre sur lequel jouer parmi l'orientation et la position de l'émetteur pour aligner ce dernier. En effet, une mauvaise orientation de l'émetteur entraîne une asymétrie de l'onde reçue contrairement à une mauvaise position de ce dernier.

De plus, les signaux des transducteurs étant traités par la même unité de traitement et donc traités de manière identique et sur un même cycle de traitement, il est immédiat de comparer la puissance transmise à chacun des transducteurs par l'onde ultrasonore les stimulant. On évite ainsi les décalages que pourrait introduire l'utilisation d'unités de traitement propres à chacun des transducteurs/récepteurs et on atteint alors un niveau de précision supérieur en comparaison au niveau obtenu par un groupement de récepteurs.

On entend ci-dessus et dans le reste de ce document par un agencement des transducteurs de manière à former une ligne de transducteurs continue que deux transducteurs contigus le long de cette ligne, aux contraintes structurelles près (par exemple, liées au support des transducteurs), présentent un espace entre eux qui est minimal.

L'indication concernant la détection de l'onde ultrasonore est soit visuelle soit auditive.

Pendant l'étape de traitement, l'unité de traitement peut analyser le décalage du pic d'intensité de l'onde reçue sur la surface de transducteurs, la forme symétrique ou asymétrique de ce même pic d'intensité et peut identifier l'erreur de position et/ou d'orientation de l'émetteur, et pendant l'étape de fourniture de l'indication par le dispositif de contrôle d'alignement, l'indication peut préciser le positionnement et/ou la ou les erreurs de positionnement de l'émetteur identifiées par l'unité de traitement.

De tels procédés permettent un alignement facilité d'un émetteur.

L'invention concerne en outre un système d'aide à l'alignement pour un émetteur à ultrasons adapté pour émettre une seule onde ultrasonore, le système d'aide à l'alignement comprenant :
- un récepteur comportant une pluralité de transducteurs chacun adapté pour recevoir une onde ultrasonore et la convertir en un signal respectif, et une unité de traitement configurée pour traiter l'ensemble des signaux issus des transducteur, au moins une partie des transducteurs étant agencés de manière à former une première ligne de transducteurs continue,
- un dispositif de contrôle d'alignement agencé pour communiquer avec l'unité de traitement, le dispositif de contrôle d'alignement étant configuré pour fournir une indication concernant le ou les transducteurs de la première ligne recevant la seule onde ultrasonore émise par ledit émetteur de manière à permettre l'alignement de l'émetteur vis-à-vis du récepteur.

Un tel système d'aide à l'alignement en permettant la mise en œuvre du procédé selon l'invention présente les avantages qui y sont liés.
le dispositif de contrôle d'alignement peut être configuré pour fournir l'indication concernant le ou les transducteurs de la première ligne recevant ladite onde ultrasonore de manière soit visuelle soit auditive.

Les transducteurs peuvent être agencés selon un assemblage deux dimensions le long de la première ligne et d'une deuxième ligne de manière à former une surface de transducteurs continue, le dispositif de contrôle d'alignement étant configuré pour fournir une indication concernant le ou les transducteurs recevant une onde ultrasonore émise par ledit émetteur sur la surface.

Chaque transducteur peut comporter une surface de réception de forme sensiblement rectangulaire, préférentiellement carrée, sur laquelle ledit transducteur reçoit l'onde ultrasonore émise par ledit émetteur, les surfaces de réception pouvant alors être agencées sous la forme de lignes et de colonnes, la direction des lignes correspondant à la première ligne de transducteurs et la direction des colonnes correspondant à la deuxième ligne de transducteurs.

De tels systèmes d'aide à l'alignement permettent chacun un alignement de l'émetteur selon la combinaison de deux directions, préférentiellement la direction horizontale et la direction verticale, assurant ainsi une parfaite optimisation de l'alignement quel que soit le positionnement d'origine de l'émetteur.

On entend ci-dessus et dans le reste de ce document par "assemblage deux dimensions le long de la première ligne et d'une deuxième ligne de manière à former une surface de transducteurs continue" que l'espace entre deux transducteurs contigus le long de la première ligne et le long de la deuxième ligne est, aux contraintes structurelles près (liées, par exemple, au support des transducteurs), minimal.

Il peut être prévu un boîtier commun, l'ensemble des transducteurs étant agencés dans ce boîtier commun.

Un tel boîtier commun permet de fournir un récepteur compact et autorise une meilleure intégration des transducteurs.

Chacun des transducteurs peut être un transducteur électromécanique préférentiellement choisi parmi les transducteurs piézoélectriques.

Le dispositif de contrôle d'alignement peut présenter une zone d'affichage et un contrôleur d'affichage configuré pour commander l'affichage d'une information sur le positionnement de l'émetteur vis-à-vis de la ou des surfaces de réception réceptionnant une onde ultrasonore, de manière à fournir l'indication nécessaire à l'alignement, cette information comportant préférentiellement l'intensité de l'onde ultrasonore reçue par chacun des transducteurs.

Une telle zone d'affichage permet à l'opérateur de visualiser rapidement les opérations de correction d'orientation et de position à réaliser pour aligner le récepteur.

Le dispositif de contrôle d'alignement peut être adapté pour fournir une indication sonore ou visuelle.

Une telle indication est aisément perceptible par l'opérateur devant effectuer l'alignement d'un émetteur.

On entend ci-dessus et dans le reste de ce document par intensité d'une onde ultrasonore reçue par chacun des transducteurs, la puissance totale, ou par unité de surface, transmise par l'onde ultrasonore audit transducteur. Cette puissance peut, par exemple, s'exprimer en décibels ou encore en unités arbitraires, telles que des Hertz, en fonction du type de transducteurs et du type de l'unité de traitement.

L'unité de traitement peut être configurée pour analyser l'intensité de l'onde ultrasonore reçue par chacun des transducteurs sur la surface de transducteurs de manière à identifier le positionnement de l'émetteur, un pic d'intensité symétrique décalé étant identifié comme une erreur de position de l'émetteur, un pic d'intensité asymétrique étant identifié comme une erreur d'orientation de l'émetteur, le contrôleur d'affichage du dispositif de contrôle d'alignement étant configuré pour commander l'affichage des indications de positionnement de l'émetteur identifiées par l'unité de traitement.

Le contrôleur d'affichage du dispositif de contrôle d'alignement peut en outre être configuré pour commander l'affichage des indications de déplacement et d'orientation à appliquer à l'émetteur pour réaliser l'alignement.

Une telle unité de traitement et un tel dispositif de contrôle d'alignement permettent de guider l'opérateur pendant l'alignement de l'émetteur offrant ainsi un alignement particulièrement performant.

L'invention concerne en outre un ensemble de détecteur à ultrasons comportant au moins un émetteur à ultrasons et un système d'aide à l'alignement selon l'invention.

Un tel ensemble de détecteur à ultrasons permet de fournir une détection optimisée, celui-ci bénéficiant de l'alignement amélioré fourni par un système d'aide à l'alignement selon l'invention.

L'émetteur à ultrasons peut être un détecteur à ultrasons adapté pour émettre une onde ultrasonore et pour détecter la réflexion de cette dernière onde sur une surface, telle que celle d'un objet à détecter ou celle d'un réflecteur.

Le récepteur du système d'aide à l'alignement peut également faire office de détecteur d'ultrasons lors de la détection d'un objet à détecter, le récepteur dans cette configuration recevant l'onde ultrasonore émise en l'absence d'objet à détecter.

Un tel ensemble de détecteur à ultrasons permet un réalignement rapide de l'émetteur. En effet, le récepteur restant en place pendant l'utilisation du détecteur, il n'y a pas besoin de déplacer le récepteur pour réaligner l'émetteur.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 illustre un exemple de détecteur présentant une désorientation d'angle α et un décalage de la distance d,
- la figure 2 illustre en fonctionnement un système d'aide à l'alignement pour un émetteur selon l'invention,
- La figure 3 illustre un schéma fonctionnel d'un système d'aide à l'alignement selon l'invention,
- Les figures 4a) à d) illustrent différents exemples d'alignement d'un émetteur associés avec le graphique des mesures d'intensité traitées par l'unité de traitement correspondant.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

La figure 2 illustre un système d'aide à l'alignement 300 selon l'invention lors de l'alignement d'un émetteur 110 à ultrasons d'un détecteur à ultrasons tel que décrit précédemment.

Un tel système d'aide à l'alignement 300 comprend un récepteur 310 à ultrasons et un dispositif de contrôle d'alignement 320. Le récepteur 310 est destiné à être placé à un emplacement, tel que celui d'un réflecteur, par rapport auquel doit être aligné un émetteur 110.

Le récepteur 310 comporte :
- une pluralité de transducteurs T1, T2 et Tn chacun adapté pour recevoir une onde ultrasonore 111 et la convertir en un signal respectif V1, V2, et Vn.
- une unité de traitement 315 configurée pour traiter l'ensemble des signaux V1, V2, Vn issus des transducteurs T1, T2, Tn.

Dans ce mode de réalisation, chacun des transducteurs T1, T2, Tn comporte une surface de réception 311 de forme carrée. De cette manière les surfaces de réception 311 sont agencées selon une configuration de matrice deux dimensions de manière à former une surface 410 de transducteurs continue. Ainsi les surfaces de réception 311, et donc les transducteurs T1, T2, Tn eux-mêmes, sont agencées selon un assemblage deux dimensions le long d'une première et d'une deuxième direction. Les surfaces de réception 311, et donc les transducteurs correspondants T1, T2, Tn, sont agencés en lignes et en colonnes, selon respectivement la première et la deuxième direction.

Ainsi, les transducteurs T1, T2, Tn, le long de la première direction, forment une première ligne 401 de transducteurs T1, T2, Tn continue. De même les transducteurs T1, T2, Tn, forment le long de la deuxième direction une deuxième ligne 402 de transducteurs T1, T2, Tn continue. Les surfaces de réception 311 forment donc ainsi une surface 410 de transducteurs T1, T2, Tn continue.

Bien entendu la continuité de l'alignement des transducteurs des première et deuxième lignes décrites ci-dessus s'entend dans la limite des contraintes structurelles du récepteur liées notamment au support des transducteurs, l'espace entre deux transducteurs contigus le long de l'une de ces deux lignes étant minimal.

Les transducteurs T1, T2, Tn sont chacun adapté pour convertir les ondes ultrasonores 111 reçues sur leur surface de réception 311 en un signal V1, V2, Vn électrique. Les transducteurs T1, T2, Tn peuvent ainsi être des transducteurs électromécaniques tels que les transducteurs piézoélectriques.

Les transducteurs T1, T2, Tn sont, comme illustré sur le schéma fonctionnel de la figure 3, chacun connecté à l'unité de traitement 315. L'unité de traitement 315 est configurée pour traiter l'ensemble des signaux V1, V2, Vn issus des transducteurs T1, T2, Tn et pour déterminer à partir de ces signaux V1, V2, V3 l'intensité de l'onde ultrasonore 111 reçue par les transducteurs T1, T2, Tn correspondants.

L'unité de traitement 315 permet de déterminer pour chacun des transducteurs T1, T2, Tn, une intensité de l'onde ultrasonore reçue par ledit transducteur correspondant, par exemple, à la puissance transmise audit transducteur en décibels ou encore en unités arbitraires, telle que des Hertz. Ainsi l'unité de traitement 315 permet de définir le ou les transducteurs T1, T2, Tn recevant l'intensité ultrasonore la plus importante.

L'unité de traitement 315 est connectée au dispositif de contrôle d'alignement 320 et est configurée pour transmettre au dispositif de contrôle d'alignement 320 le résultat du traitement des signaux V1, V2, Vn issus des transducteurs T1, T2, Tn.

Le dispositif de contrôle d'alignement 320 comporte un moniteur formant une zone d'affichage et un contrôleur d'affichage adapté pour contrôler l'affichage de ce dernier. Le contrôleur d'affichage est adapté pour faire afficher sur le moniteur la distribution deux dimensions de l'intensité reçue par les transducteurs T1, T2, Tn. Le contrôleur d'affichage permet également d'afficher sur le moniteur des indications 321, 322 sur la direction et sur l'orientation dans lesquelles doit être déplacé l'émetteur 110.

En utilisation, un tel système d'aide à l'alignement 300 pour émetteur 110 est mis en œuvre selon un procédé comportant les étapes suivantes :
- positionnement du récepteur 310 au niveau d'un emplacement, tel que la zone de passage de l'objet à détecter, l'emplacement du réflecteur 120 ou encore d'un récepteur, par rapport auquel l'émetteur doit être aligné,
- émission par l'émetteur 110 d'une seule onde ultrasonore 111,
- réception par les transducteurs T1, T2, Tn de l'onde ultrasonore 111 et conversion en signaux V1, V2, Vn,
- traitement par l'unité de traitement 315 des signaux V1, V2, Vn issus des transducteurs T1, T2, Tn,
- fourniture par le dispositif de contrôle d'alignement 320 d'une indication concernant la détection de la seule onde ultrasonore émise par l'émetteur 110 sur la surface 410 de transducteurs, et notamment, le long de la première ligne 401, de manière à permettre l'alignement de l'émetteur 110 vis-à-vis du récepteur.

L'indication fournie, avec le dispositif de contrôle illustré sur la figure 3, correspond à l'affichage de la distribution deux dimensions de l'intensité reçue par les différents transducteurs T1, T2, Tn.

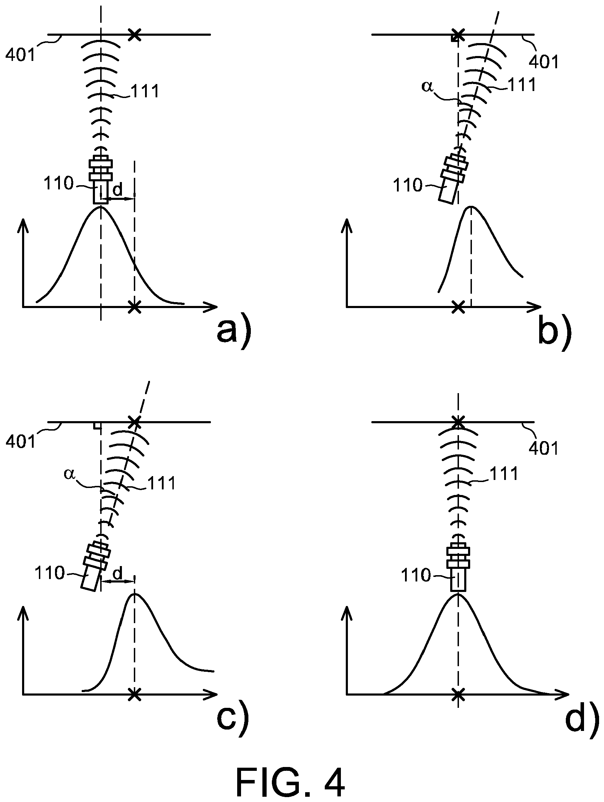

Les figures 4 a) à d) illustrent des exemples d'alignement d'un émetteur 110 dans le cadre d'un récepteur 310 présentant une unique ligne de transducteurs, la première ligne 401, le long de laquelle sont alignés ces transducteurs T1, T2, Tn. Ces figures 4a) à 4d) associent, sur leur partie basse, chaque exemple d'alignement à la variation d'intensité le long de la première ligne telle qu'elle est traitée par l'unité de traitement 315.

La figure 4a) illustre un exemple d'émetteur 110 décalé d'une distance d. Les mesures traitées par l'unité de traitement 315 montrent un pic d'intensité parfaitement symétrique décalé de la distance d. Un tel décalage sans asymétrie est caractéristique d'une erreur de position.

La figure 4b) illustre un exemple d'émetteur 110 présentant une désorientation d'un angle α. Les mesures traitées par l'unité de traitement 315 montrent un pic d'intensité qui est asymétrique et décentré en raison de la désorientation. Une telle asymétrie du pic d'intensité associée à un tel décalage est caractéristique d'une erreur d'orientation.

La figure 4c) illustre un exemple d'émetteur 110 présentant une désorientation d'un angle α et un décalage d'une distance d. Les mesures traitées par l'unité de traitement 315 montrent un pic d'intensité qui, s'il semble bien centré, présente une asymétrie marquée caractéristique d'une erreur d'orientation. Le fait que le pic d'intensité présente un décalage différent de celui lié à la seule désorientation de l'émetteur 110, qui, sur cette figure, compense le décalage de la désorientation, est donc caractéristique d'une erreur de position de l'émetteur 110, couplée à une erreur d'orientation de l'émetteur 110.

La figure 4d) illustre un exemple d'émetteur 110 aligné. Dans ce cas les ondes ultrasonores sont reçues au centre du récepteur et seul les transducteurs T1, T2, Tn centraux sont stimulés avec une intensité qui diminue au fur et à mesure qu'on s'éloigne du centre du récepteur 300. Le pic d'intensité est donc dans cet exemple symétrique et centré, ce qui est caractéristique d'un bon alignement de l'émetteur.

Ainsi avec un système d'aide à l'alignement 300 selon l'invention il est possible de discriminer une erreur d'orientation, d'une erreur de position et même de décorréler ces deux types d'erreurs lorsqu'un émetteur 110 cumule ces deux types d'erreurs.

Selon une possibilité particulièrement avantageuse de l'invention, l'unité de traitement peut être adaptée pour identifier selon le principe explicité ci-dessus le ou les paramètres à modifier pour aligner le détecteur et la direction selon laquelle le paramètre doit être modifié. Ces informations peuvent être transmises au dispositif de contrôle d'alignement 320 de manière à ce que ce dernier affiche les indications pour faciliter l'alignement de l'émetteur 110.

Selon cette possibilité, l'unité de traitement 315 est configurée pour analyser la variation de l'intensité de la seule onde ultrasonore 111 le long de la surface 410 de transducteurs T1, T2, Tn de manière à identifier les erreurs de positionnement de l'émetteur 110, un pic d'intensité symétrique décalé étant identifié comme une erreur de position de l'émetteur 110, un pic d'intensité asymétrique étant identifié comme une erreur d'orientation de l'émetteur 110. Le contrôleur d'affichage du dispositif de contrôle d'alignement 320 est configuré pour commander l'affichage pour afficher des indications sur la ou les erreurs de positionnement de l'émetteur 110 identifiées par l'unité de traitement 315 et du moyen pour la ou les corriger. Ainsi, en fonctionnement, comme illustré sur la figure 2, le moniteur peut afficher sur une première zone 321 la ou les directions selon lesquelles l'émetteur 110 doit être décalé pour corriger sa position et sur une deuxième zone 322 la ou les directions selon lesquelles l'émetteur 110 doit être tourné pour corriger son orientation.

Le système d'aide à l'alignement 300 selon cette possibilité est mis en œuvre par un procédé selon lequel :
- pendant l'étape de traitement, l'unité de traitement 315 analyse le décalage du pic d'intensité de l'onde ultrasonore reçue sur la surface 410 de transducteurs T1, T2, Tn et la forme symétrique ou asymétrique de ce même pic d'intensité et en extrait l'erreur de position et/ou d'orientation de l'émetteur 110,
- pendant l'étape de fourniture de l'indication par le dispositif de contrôle d'alignement 320, l'indication précise la ou les erreurs de positionnement de l'émetteur 110 identifiées par l'unité de traitement 315.

Selon une première variante de l'invention dans laquelle le système d'aide à l'alignement 300 est destiné à l'alignement de l'émetteur 110 d'un détecteur selon l'une parmi la première et la deuxième configuration (voir présentation de l'art antérieur), le système d'aide à l'alignement 300 peut faire partie d'un ensemble de détecteur à ultrasons. Selon cette première variante, l'ensemble de détecteur comprend le détecteur 110 qui comporte lui même un récepteur et un émetteur mono-boîtier, et un système d'aide à l'alignement 300 selon l'invention. Dans une telle configuration, le système d'aide à l'alignement 300 est uniquement mis en œuvre lors de l'alignement de l'émetteur/détecteur 110.

Selon une deuxième variante de l'invention dans laquelle le système d'aide à l'alignement 300 est destiné à l'alignement d'un émetteur 110 d'un détecteur selon la troisième configuration (voir présentation de l'art antérieur), le système d'aide à l'alignement peut faire partie d'un ensemble de détecteur à ultrasons. Selon cette deuxième variante, le récepteur 310 du système d'aide à l'alignement 300 peut également être mis en œuvre lors de la détection du passage d'un objet à détecter et fait alors office de récepteur du détecteur à ultrasons, le détecteur à ultrasons ne comportant pas de récepteur dédié. Un tel ensemble de détecteur est particulièrement avantageux pour autoriser un alignement régulier de l'émetteur 110, le récepteur du système d'aide à l'alignement restant en place pendant le fonctionnement du détecteur.

Selon cette deuxième variante, il est également possible que le détecteur à ultrasons comporte un récepteur à ultrasons dédié sans que l'on sorte du cadre de l'invention. Bien entendu, dans ce cas, le récepteur 310 n'est mis en place que durant la réalisation d'un alignement de l'émetteur 110.

Bien entendu, si dans le mode de réalisation décrit ci-dessus la surface de réception 311 de chacun des transducteurs T1, T2, Tn présente une forme carrée, la forme de la surface de réception d'un ou plusieurs transducteurs peut présenter une autre forme de surface de réception sans que l'on sorte du cadre de l'invention. Ainsi un ou plusieurs transducteurs T1, T2, Tn peuvent, par exemple, présenter une surface de forme rectangulaire ou de losange ou encore une forme curviligne ceci sous réserve qu'une telle forme est compatible avec le fait qu'au moins une partie des transducteurs est agencée pour former une première ligne de transducteurs continue.

Selon la possibilité selon laquelle les transducteurs T1, T2, Tn présentent une surface de réception 311 de forme autre que carrée, il est également envisageable que la première et la deuxième ligne forment un angle autre qu'un angle sensiblement égal à 90°. Ainsi dans le cas où les surfaces de réception présentent une forme en losange, la première et la deuxième ligne peuvent par exemple former un angle de 30° l'une par rapport à l'autre sans sortir du cadre de l'invention.

Si dans le mode de réalisation de l'invention décrit ci-dessus, le dispositif de contrôle 320 comporte un moniteur pour fournir les indications concernant le ou les transducteurs T1, T2, Tn recevant la seule onde ultrasonore 111 émise par l'émetteur 110, il est également possible, sans que l'on sorte du cadre de l'invention, que le dispositif de contrôle d'alignement fournisse ladite indication par un autre moyen tel que par exemple un système sonore.

## Revendications

1. Procédé d'alignement d'un émetteur (110) au moyen d'un système d'aide à l'alignement (300), le système d'alignement comportant :
- un récepteur (310) comportant une pluralité de transducteurs (T1, T2, Tn) chacun adapté pour recevoir une onde ultrasonore (111) et la convertir en un signal (V1, V2, Vn) respectif, et une unité de traitement (315) configurée pour traiter l'ensemble des signaux (V1, V2, Vn) issus des transducteurs (T1, T2, Tn), au moins une partie des transducteurs (T1, T2, Tn) étant agencés de manière à former une première ligne (401) de transducteurs continue,
- un dispositif de contrôle d'alignement (320) agencé pour communiquer avec l'unité de traitement (315), le dispositif de contrôle d'alignement (320) étant configuré pour fournir une indication concernant le ou les transducteurs (T1, T2, Tn) de la première ligne (401) recevant ladite onde ultrasonore émise par ledit émetteur (110) de manière à permettre l'alignement de l'émetteur (110) vis-à-vis du récepteur (310),
Le procédé comprenant les étapes suivantes de:
- positionnement du récepteur (310) au niveau d'un emplacement, tel que celui d'un réflecteur (120), par rapport auquel l'émetteur (110) doit être aligné,
- émission par l'émetteur (110) d'une seule onde ultrasonore (111),
- réception de l'onde ultrasonore (111) par les transducteurs (T1, T2, Tn) et conversion en signaux (V1, V2, Vn),
- traitement par l'unité de traitement (315) des signaux (V1, V2, Vn) issus des transducteurs (T1, T2, Tn),
- fourniture par le dispositif de contrôle d'alignement (320) d'une indication concernant la détection de la seule onde ultrasonore émise par l'émetteur (110) le long de la première ligne (401) de manière à permettre l'alignement de l'émetteur (110) vis-à-vis du récepteur (310).

2. Procédé selon la revendication 1, dans lequel l'indication concernant la détection de l'onde ultrasonore est soit visuelle soit auditive.

3. Procédé d'alignement d'un émetteur (110) selon la revendication 2, dans lequel pendant l'étape de traitement, l'unité de traitement (315) analyse le décalage du pic d'intensité de l'onde reçue sur la surface (410) de transducteurs (T1, T2, Tn) et la forme symétrique ou asymétrique de ce même pic d'intensité et identifie l'erreur de position et/ou d'orientation de l'émetteur (110), et dans lequel pendant l'étape de fourniture de l'indication par le dispositif de contrôle d'alignement (320), l'indication précise le positionnement et/ou la ou les erreurs de positionnement de l'émetteur (110) identifiées par l'unité de traitement (315).

4. Système d'aide à l'alignement (300) pour un émetteur (110) à ultrasons adapté pour émettre une seule onde ultrasonore, le système d'aide à l'alignement (300) comprenant :
- un récepteur (310) comportant une pluralité de transducteurs (T1, T2, Tn) chacun adapté pour recevoir une onde ultrasonore (111) et la convertir en un signal (V1, V2, Vn) respectif, et une unité de traitement (315) configurée pour traiter l'ensemble des signaux (V1, V2, Vn) issus des transducteurs (T1, T2, Tn), au moins une partie des transducteurs (T1, T2, Tn) étant agencés de manière à former une première ligne (401) de transducteurs continue,
- un dispositif de contrôle d'alignement (320) agencé pour communiquer avec l'unité de traitement (315), le dispositif de contrôle d'alignement (320) étant configuré pour fournir une indication concernant le ou les transducteurs (T1, T2, Tn) de la première ligne (401) recevant la seule onde ultrasonore émise par ledit émetteur (110) de manière à permettre l'alignement de l'émetteur (110) vis-à-vis du récepteur (310).

5. Système d'aide à l'alignement (300) selon la revendication 4, dans lequel le dispositif de contrôle d'alignement (320) est configuré pour fournir l'indication concernant le ou les transducteurs (T1, T2, Tn) de la première ligne (401) recevant ladite onde ultrasonore de manière soit visuelle soit auditive.

6. Système d'aide à l'alignement (300) selon la revendication 4 ou 5, **caractérisé en ce que** les transducteurs (T1, T2, Tn) sont agencés selon un assemblage deux dimensions le long de la première ligne (401) et d'une deuxième ligne (402) de manière à former une surface (410) de transducteurs continue, le dispositif de contrôle d'alignement (320) étant configuré pour fournir une indication concernant le ou les transducteurs (T1, T2, Tn) recevant une onde ultrasonore (111) émise par ledit émetteur (110) sur la surface (410).

7. Système d'aide à l'alignement (300) selon la revendication 6, **caractérisé en ce que** chaque transducteur (T1, T2, Tn) comporte une surface de réception (311) de forme sensiblement rectangulaire, préférentiellement carrée, sur laquelle ledit transducteur (T1, T2, Tn) reçoit l'onde ultrasonore (111) émise par ledit émetteur (110), les surfaces de réception (311) étant agencées sous la forme de lignes et de colonnes, la direction des lignes correspondant à la première ligne (401) de transducteurs et la direction des colonnes correspondant à la deuxième ligne (402) de transducteurs.

8. Système d'aide à l'alignement (300) selon la revendication 6 ou 7, **caractérisé en ce que** le dispositif de contrôle d'alignement (320) présente une zone d'affichage et un contrôleur d'affichage configuré pour commander l'affichage d'une information sur le positionnement de l'émetteur (110) vis-à-vis de la ou des surfaces de réception (311) réceptionnant une onde ultrasonore (111) de manière à fournir l'indication nécessaire à l'alignement, cette information comportant préférentiellement l'intensité de l'onde ultrasonore reçue par chacun des transducteurs (T1, T2, Tn).

9. Système d'aide à l'alignement (300) selon la revendication 8, **caractérisé en ce que** l'unité de traitement (315) est configurée pour analyser l'intensité de l'onde ultrasonore reçue par chacun des transducteurs (T1, T2, Tn) sur la surface (410) de transducteurs (T1, T2, Tn) de manière à identifier les erreurs de positionnement de l'émetteur (110), un pic d'intensité symétrique décalé étant identifié comme une erreur de position de l'émetteur (110), un pic d'intensité asymétrique étant identifié comme une erreur d'orientation de l'émetteur (110), le contrôleur d'affichage du dispositif de contrôle d'alignement étant configuré pour commander l'affichage des indications de positionnement de l'émetteur (110) identifiées par l'unité de traitement (315).

10. Ensemble de détecteur à ultrasons (110, 300) comportant au moins un émetteur (110) à ultrasons adapté pour émettre une seule onde ultrasonore et **caractérisé en ce qu**'il comporte en outre un système d'aide à l'alignement (300) selon l'une quelconque des revendications 4 à 9.

11. Ensemble de détecteur à ultrasons (110, 300) selon la revendication 10, **caractérisé en ce que** l'émetteur (110) à ultrasons est un détecteur à ultrasons adapté pour émettre une onde ultrasonore (111) et pour détecter la réflexion de cette dernière onde sur une surface, telle que celle d'un objet à détecter ou celle d'un réflecteur (120).

12. Ensemble de détecteur ultrasonore (110, 300) selon la revendication 10, **caractérisé en ce que** le récepteur (310) du système d'aide à l'alignement (300) fait également office de récepteur à ultrasons du détecteur à ultrasons lors de la détection d'un objet à détecter, le récepteur (310) dans cette configuration recevant l'onde ultrasonore (111) émise en l'absence d'objet à détecter.

## Patentansprüche

1. Verfahren zum Ausrichten eines Senders (110) mittels eines Ausrichthilfesystems (300), wobei das Ausrichthilfesystem enthält:
- einen Empfänger (310), der eine Vielzahl von Wandlern (T1, T2, Tn), die jeweils dazu ausgelegt sind, eine Ultraschallwelle (111) zu empfangen und sie in ein entsprechendes Signal (V1, V2, Vn) umzuwandeln, und eine Verarbeitungseinheit (315) enthält, die dazu ausgelegt ist, alle von den Wandlern (T1, T2, Tn) ausgegebenen Signale (V1, V2, Vn) zu verarbeiten, wobei zumindest einige der Wandler (T1, T2, Tn) so angeordnet sind, dass sie eine erste kontinuierliche Reihe (401) von Wandlern bilden,
- eine Ausrichtsteuervorrichtung (320), die dazu angeordnet ist, mit der Verarbeitungseinheit (315) zu kommunizieren, wobei die Ausrichtsteuervorrichtung (320) dazu ausgelegt ist, einen Hinweis darauf zu erbringen, welcher bzw. welche Wandler (T1, T2, Tn) der ersten Reihe (401) die von dem Sender (110) ausgesandte Ultraschallwelle empfangen, so dass die Ausrichtung des Senders (110) in Bezug auf den Empfänger (310) erfolgen kann,
wobei das Verfahren die folgenden Schritte umfasst:
- Positionieren des Empfängers (310) an einer Stelle, wie etwa an einem Reflektor (120), in Bezug auf weiche der Sender (110) ausgerichtet werden soll,
- Aussenden einer einzelnen Ultraschallwelle (111) durch den Sender (110),
- Empfangen der Ultraschallwelle (110) durch die Wandler (T1, T2, Tn) und Umwandeln in Signale (V1, V2, Vn),
- Verarbeiten der von den Wandlern (T1, T2, Tn) ausgegebenen Signale (V1, V2, Vn) durch die Verarbeitungseinheit (315),
- Erbringen eines Hinweises auf die Erfassung der vom Sender (110) entlang der ersten Reihe (401) ausgesandten einzelnen Ultraschallwelle durch die Ausrichtsteuervorrichtung (320), so dass die Ausrichtung des Senders (110) in Bezug auf den Empfänger (310) erfolgen kann.

2. Verfahren nach Anspruch 1, wobei der Hinweis auf die Erfassung der Ultraschallwelle entweder visuell oder auditiv erfolgt.

3. Verfahren zum Ausrichten eines Senders (110) nach Anspruch 2, wobei bei dem Schritt der Verarbeitung die Verarbeitungseinheit (315) die Verschiebung der Intensitätsspitze der empfangenen Welle an der Oberfläche (410) von Wandlern (T1, T2, Tn) und die symmetrische bzw. asymmetrische Form derselben Intensitätsspitze analysiert und den Positions- und/oder Orientierungsfehler des Senders (110) identifiziert, und wobei bei dem Schritt des Erbringens von dem Hinweis durch die Ausrichtsteuervorrichtung (320) die Positionierung und/oder der bzw. die von der Verarbeitungseinheit (315) identifizierte(n) Positionierungsfehler des Senders (110) durch den Hinweis präzisiert werden.

4. Ausrichthilfesystem (300) für einen Ultraschallsender (110), der dazu ausgelegt ist, eine einzelne Ultraschallwelle auszusenden, wobei das Ausrichthilfesystem (300) enthält:
- einen Empfänger (310), der eine Vielzahl von Wandlern (T1, T2, Tn), die jeweils dazu ausgelegt sind, eine Ultraschallwelle (111) zu empfangen und sie in ein entsprechendes Signal (V1, V2, Vn) umzuwandeln, und eine Verarbeitungseinheit (315) enthält, die dazu ausgelegt ist, alle von den Wandlern (T1, T2, Tn) ausgegebenen Signale (V1, V2, Vn) zu verarbeiten, wobei zumindest einige der Wandler (T1, T2, Tn) so angeordnet sind, dass sie eine erste kontinuierliche Reihe (401) von Wandlern bilden,
- eine Ausrichtsteuervorrichtung (320), die dazu angeordnet ist, mit der Verarbeitungseinheit (315) zu kommunizieren, wobei die Ausrichtsteuervorrichtung (320) dazu ausgelegt ist, einen Hinweis darauf zu erbringen, welcher bzw. welche Wandler (T1, T2, Tn) der ersten Reihe (401) die von dem Sender (110) ausgesandte einzelne Ultraschallwelle empfangen, so dass die Ausrichtung des Senders (110) in Bezug auf den Empfänger (310) erfolgen kann.

5. Ausrichthilfesystem (300) nach Anspruch 4, wobei die Ausrichtsteuervorrichtung (320) dazu ausgelegt ist, den Hinweis darauf, welcher bzw. welche Wandler (T1, T2, Tn) der ersten Reihe (401) die Ultraschallwelle empfangen, entweder visuell oder auditiv zu erbringen.

6. Ausrichthilfesystem (300) nach Anspruch 4 oder 5, **dadurch gekennzeichnet, dass** die Wandler (T1, T2, Tn) in einer zweidimensionalen Anordnung entlang der ersten Reihe (401) und einer zweiten Reihe (402) so angeordnet sind, dass sie eine kontinuierliche Wandleroberfläche (410) bilden, wobei die Ausrichtsteuervorrichtung (320) dazu ausgelegt ist, einen Hinweis darauf zu erbringen, welcher bzw. welche Wandler (T1, T2, Tn) eine von dem Sender (110) ausgesandte Ultraschallwelle (111) an der Oberfläche (410) empfangen.

7. Ausrichthilfesystem (300) nach Anspruch 6, **dadurch gekennzeichnet, dass** jeder Wandler (T1, T2, Tn) eine im wesentlichen rechteckige, vorzugsweise quadratische, Empfangsfläche (311) aufweist, an der der Wandler (T1, T2, Tn) die von dem Sender (110) ausgesandte Ultraschallwelle (111) empfängt, wobei die Empfangsflächen (311) in Form von Zeilen und Spalten angeordnet sind, wobei die Richtung der Zeilen der ersten Reihe (401) von Wandlern entspricht und die Richtung der Spalten der zweiten Reihe (402) von Wandlern entspricht.

8. Ausrichthilfesystem (300) nach Anspruch 6 oder 7, **dadurch gekennzeichnet, dass** die Ausrichtsteuervorrichtung (320) einen Anzeigebereich und eine Anzeigesteuerung aufweist, die dazu ausgelegt ist, die Anzeige einer Information über die Positionierung des Senders (110) in Bezug auf die eine Ultraschallwelle (111) empfangende(n) Oberfläche(n) (311) zu steuern, um den für die Ausrichtung erforderlichen Hinweis zu erbringen, wobei diese Information vorzugsweise die Intensität der von jedem der Wandler (T1, T2, Tn) empfangenen Ultraschallwelle umfasst.

9. Ausrichthilfesystem (300) nach Anspruch 8, **dadurch gekennzeichnet, dass** die Verarbeitungseinheit (315) dazu ausgelegt ist, die Intensität der von jedem der Wandler (T1, T2, Tn) empfangenen Ultraschallwelle an der Oberfläche (410) der Wandler (T1, T2, Tn) zu analysieren, um Positionierungsfehler des Senders (110) zu identifizieren, wobei eine verschobene symmetrische Intensitätsspitze als ein Positionsfehler des Senders (110) identifiziert wird, eine asymmetrische Intensitätsspitze als ein Orientierungsfehler des Senders (110) identifiziert wird und die Anzeigesteuerung der Ausrichtsteuervorrichtung dazu ausgelegt ist, die Anzeige der von der Verarbeitungseinheit (315) identifizierten Hinweise auf die Positionierung des Senders (110) zu steuern.

10. Ultraschall-Detektoranordnung (110, 300) mit zumindest einem Ultraschall-sender (110), der dazu ausgelegt ist, eine einzelne Ultraschallwelle auszusenden und **dadurch gekennzeichnet ist, dass** sie ferner ein Ausrichthilfesystem (300) nach einem der Ansprüche 4 bis 9 enthält.

11. Ultraschall-Detektoranordnung (110, 300) nach Anspruch 10, **dadurch gekennzeichnet, dass** der Ultraschall-Sender (110) ein Ultraschall-Detektor ist, der dazu ausgelegt ist, eine Ultraschallwelle (111) auszusenden und die Reflexion dieser Welle an einer Oberfläche, wie etwa an der eines zu erfassenden Objekts oder eines Reflektors (120), zu erfassen.

12. Ultraschall-Detektoranordnung (110, 300) nach Anspruch 10, **dadurch gekennzeichnet, dass** der Empfänger (310) des Ausrichthilfesystems (300) bei der Erfassung eines zu erfassenden Objekts auch als Ultraschall-Empfänger des Ultraschall-Detektors dient, wobei der Empfänger (310) bei dieser Auslegung die bei Ausbleiben eines zu erfassenden Objekts ausgesandte Ultraschallwelle (111) empfängt.

## Claims

1. A method for aligning a transmitter (110) by means of an alignment aid system (300), the alignment system comprising:
- a receiver (310) comprising a plurality of transducers (T1, T2, Tn) each adapted to receive an ultrasonic wave (111) and convert it into a respective signal (V1, V2, Vn), and a processing unit (315) configured to process all the signals (V1, V2, Vn) coming from the transducers (T1, T2, Tn), at least part of the transducers (T1, T2, Tn) being arranged so as to form a first continuous row (401) of transducers,
- an alignment control device (320) arranged to communicate with the processing unit (315), the alignment control device (320) being configured to supply an indication regarding the transducer(s) (T1, T2, Tn) of the first row (401) receiving said ultrasonic wave transmitted by said transmitter (110) so as to enable the transmitter (110) to be aligned in relation to the receiver (310),
the method comprising the following steps of:
- positioning the receiver (310) at a location, such as the one of a reflector (120), with respect to which the transmitter (110) must be aligned,
- transmitting by the transmitter (110) a single ultrasonic wave (111),
- receiving the ultrasonic wave (111) by the transducers (T1, T2, Tn) and converting into signals (V1, V2, Vn),
- processing by the processing unit (315) the signals (V1, V2, Vn) coming from the transducers (T1, T2, Tn),
- supplying by the alignment control device (320) an indication about the detection of the single ultrasonic wave transmitted by the transmitter (110) along the first row (401) so as to enable the transmitter (110) to be aligned in relation to the receiver (310).

2. The method according to claim 1, wherein the indication about the detection of the ultrasonic wave is either visual or audible.

3. The method for aligning a transmitter (110) according to claim 2, wherein during the processing step, the processing unit (315) analyses the peak intensity shift of the wave received on the surface (410) of transducers (T1, T2, Tn) and the symmetrical or asymmetrical shape of the same peak intensity and identifies the position and/or orientation error of the transmitter (110), and wherein during the indication supplying step by the alignment control device (320), the indication specifies the positioning and/or the positioning error(s) of the transmitter (110) identified by the processing unit (315).

4. An alignment aid system (300) for an ultrasonic transmitter (110) adapted to transmit a single ultrasonic wave, the alignment aid system (300) comprising:
- a receiver (310) comprising a plurality of transducers (T1, T2, Tn) each adapted to receive an ultrasonic wave (111) and convert it into a respective signal (V1, V2, Vn), and a processing unit (315) configured to process all the signals (V1, V2, Vn) coming from the transducers (T1, T2, Tn), at least part of the transducers (T1, T2, Tn) being arranged so as to form a first continuous row (401) of transducers,
- an alignment control device (320) arranged to communicate with the processing unit (315), the alignment control device (320) being configured to supply an indication about the transducer(s) (T1, T2, Tn) of the first row (401) receiving the single ultrasonic wave transmitted by said transmitter (110) so as to enable the transmitter (110) to be aligned in relation to the receiver (310).

5. The alignment aid system (300) according to claim 4, wherein the alignment control device (320) is configured to supply the indication about the transducer(s) (T1, T2, Tn) of the first row (401) receiving said ultrasonic wave either visually or audibly.

6. The alignment aid system (300) according to claim 4 or 5, **characterized in that** the transducers (T1, T2, Tn) are arranged according to a two-dimension assembly along the first row (401) and a second row (402) so as to form a continuous surface (410) of transducers, the alignment control device (320) being configured to supply an indication about the transducer(s) (T1, T2, Tn) receiving an ultrasonic wave (111) transmitted by said transmitter (110) on the surface (410).

7. The alignment aid system (300) according to claim 6, **characterized in that** each transducer (T1, T2, Tn) comprises a receiving surface (311) having a substantially rectangular shape, preferably a square shape, on which said transducer (T1, T2, Tn) receives the ultrasonic wave (111) transmitted by said transmitter (110), the receiving surfaces (311) being arranged as rows and columns, the row direction corresponding to the first row (401) of transducers and the column direction corresponding to the second row (402) of transducers.

8. The alignment aid system (300) according to claim 6 or 7, **characterized in that** the alignment control device (320) exhibits a display area and a display controller configured to control the display of information regarding the positioning of the transmitter (110) in relation to the receiving surface(s) (311) receiving an ultrasonic wave (111) so as to supply the required indication for the alignment, this information preferably comprising the intensity of the ultrasonic wave received by each transducer (T1, T2, Tn).

9. The alignment aid system (300) according to claim 8, **characterized in that** the processing unit (315) is configured to analyze the intensity of the ultrasonic wave received by each transducer (T1, T2, Tn) on the surface (410) of transducers (T1, T2, Tn) so as to identify the positioning errors of the transmitter (110), a shifted symmetrical peak intensity being identified as a position error of the transmitter (110), an asymmetrical peak intensity being identified as an orientation error of the transmitter (110), the display controller of the alignment control device being configured to control the display of positioning indications of the transmitter (110) identified by the processing unit (315).

10. An ultrasonic detector assembly (110, 300) comprising at least one ultrasonic transmitter (110) adapted to transmit a single ultrasonic wave and **characterized in that** it further comprises an alignment aid system (300) according to any of claims 4 to 9.

11. The ultrasonic detector assembly (110, 300) according to claim 10, **characterized in that** the ultrasonic transmitter (110) is an ultrasonic detector adapted to transmit an ultrasonic wave (111) and to detect the reflection of the latter wave on a surface, such as the one of an object to be detected or the one of a reflector (120).

12. The ultrasonic detector assembly (110, 300) according to claim 10, **characterized in that** the receiver (310) of the alignment aid system (300) also acts as an ultrasonic receiver of the ultrasonic detector upon detecting an object to be detected, the receiver (310) in this configuration receiving the ultrasonic wave (111) transmitted in the absence of an object to be detected.
